# EUROPÄISCHE PATENTSCHRIFT

(11) **EP 0 689 688 B1**
(45) Veröffentlichungstag und Bekanntmachung des Hinweises auf die Patenterteilung: **14.01.1998**
(21) Anmeldenummer: 94909889.1
(22) Anmeldetag: 14.03.1994
(51) Int. Cl.: G05B 19/05, G06F 7/00

(54) **FUZZY-STANDARD-AUTOMATISIERUNGSSYSTEM FÜR INDUSTRIELLE ANLAGEN**
FUZZY STANDARD AUTOMATION SYSTEM FOR INDUSTRIAL PLANTS
SYSTEME STANDARD D'AUTOMATISATION A LOGIQUE FLOUE POUR INSTALLATIONS INDUSTRIELLES

(30) Priorität: 15.03.1993 DE 4308194
(43) Veröffentlichungstag der Anmeldung: 03.01.1996
(73) Patentinhaber: SIEMENS AKTIENGESELLSCHAFT, 80333 München (DE)
(72) Erfinder: WOLF, Thomas, D-91334 Hemhofen (DE)
(86) Internationale Anmeldenummer: DE9400284
(87) Internationale Veröffentlichungsnummer: WO9422066

(56) Entgegenhaltungen:
- EP-A- 0 373 628
- EP-A- 0 380 785
- EP-A- 0 424 890
- EP-A- 0 515 209
- GB-A- 2 254 942
- ELECTRONIQUE RADIO PLANS, Nr.542, Januar 1993, PARIS FR Seiten 6 - 10, XP330474 J.-L. VERN 'Un Moniteur Flou'
- PATENT ABSTRACTS OF JAPAN vol. 15, no. 156 (P-1192) 18. April 1991 & JP,A,03 025 532 (OMRON CORP.) 4. Februar 1991
- ENGINEERING AND AUTOMATION, Bd.14, Nr.6, 1992, GE Seiten 10 - 11 HARALD WEGMANN 'Fuzzy Control with SIMATIC S5' in der Anmeldung erwähnt

## Beschreibung

Die Erfindung betrifft ein Automatisierungssystem mit programmierbaren Automatisierungsgeräten, insbesondere speicherprogrammierbaren Steuerungen zur Regelung einer industriellen Anlage, und mit zumindest einer Dateneingabe-, Rechen- und Projektierungseinheit, zur Datengenerierung für Fuzzy-Standardsysteme, wobei diese ein fortlaufend optimierbares Fuzzy-Entwurfsprogramm aufweist, dem Zugehörigkeitsfunktionen in parametrierter Form eingebbar sind und wobei die Eingabe der Zugehörigkeitsfunktionen sowie von Bearbeitungsbefehlen und Parametern, insbesondere über Funktionstabellen in Bildform erfolgt.

Automatisierungssysteme mit programmierbaren Automatisierungsgeraten zur Steuerung und Regelung von industriellen Anlagen sind in vielfältiger Ausgestaltung bekannt. Es ist weiterhin bekannt, derartige Systeme mit Fuzzy-Control-Einheiten in Hard- oder Softwareausführung zu versehen, die insbesondere PID-Regler ersetzen oder parallel arbeitend angeordnet sind. So ist eine Verbesserung der Anlagenregelung möglich.

Es ist Aufgabe der Erfindung, Automatisierungssysteme mit Fuzzy-Control-Einheiten und insbesondere einzelne Fuzzy-Komponenten, z.B. Fuzzy-Regler, einfacher und funktioneller projektieren zu können. Die Projektierung derartiger Systeme erfordert bisher sowohl eine eingehende Kenntnis der in der Anlage ablaufenden Prozesse als auch der Fuzzy-Technik, d.h. der Fuzzyfizierung der Prozeßwissensdaten, der Defuzzyfizierung und der Fuzzy-Inference-Logic. Erfindungsgemäß soll die Anwendung der Fuzzytechnik ohne Wissen über die Fuzzy-Theorie und ihre Anwendung erfolgen können. Darüber hinaus soll auch eine leichte Beobachtung und Optimierung der Funktion des Automatisierungssystems und der Fuzzy-Komponenten möglich sein, die Optimierung unter Umständen sogar selbsttätig. Der Anwender soll sich voll auf die Projektierung der Fuzzysysteme konzentrieren können und dabei lediglich sein Erfahrungswissen in einfachen Fuzzyregeln eingeben.

Die Aufgabe wird dadurch gelöst, daß in den Automatisierungsgeraten in an die jeweiligen Gerätebedingungen angepaßten, festen Ablaufprogrammen, zur Regelgrößebildung Fuzzy-Standard-Programme abgearbeitet werden, wobei die Automatisierungsgeräte die für das Ablaufen der Fuzzy-Standardsysteme notwendige Hard- sowie die Software in zwei Teilen enthalten, die gelinkt sind und wobei ein Softwareteil die Standardteile des Fuzzy-Programms betrifft, während der andere Softwareteil die variablen Teile betrifft, die Fuzzy-Parametrierdaten, die Zugehörigkeitsfunktionen, -regeln, -grenzen sowie die Anzahl der Ein- und Ausgänge o.ä. betreffen.

Automatisierungsgeräte in Form von speicherprogrammierbaren Steuerungen (SPS) mit Fuzzy-Softwarebausteinen auszurüsten, ist bereits bekannt. Eine vorteilhafte Ausführung, von der die Erfindung ausgeht, beschreibt der Aufsatz "Fuzzy-Control mit Simatic S5" in der Zeitschrift Engineering und Automation 14 (1992) Heft 5, Seiten 12 und 13. Weiterhin ist aus der EP 0 515 209 A2 ein Verfahren und eine Vorrichtung zur Anwendung von Fuzzy-Control bekannt, wobei die Zugehörigkeitsfunktionen über Lerndaten, die als Eingabe- und Ausgabewerte dienen gelernt werden, damit das Resultat des Fuzzy-Control-Verfahrens dem Lerndatenwissen entspricht. Dabei werden die Ein- und Ausgabedaten so beschränkt, daß die Zugehörigkeitsfunktionen vorgabegerecht geändert werden. Weiterhin ist aus der EP 0 373 628 A2 bekannt, mit einer Zugehörigkeitsfunktionseinheit in einer Fuzzy-Control-Einheit zu arbeiten, bei der die Positionen und Formen der Zugehörigkeitsfunktionen entsprechend Eingabedaten, die dem menschlichen Empfinden entsprechen, anforderungsgerecht geändert werden. Ebenso wie in dem, in dem zitierten Aufsatz beschriebenen, Stand der Technik ist es aber auch hier notwendig, daß der Operator die FuzzyTechnik und die wesentlichen internen Abläufe der Fuzzy-Inference-Vorgänge kennt und derart berücksichtigt, daß seine Eingaben sinnvoll verarbeitbar sind. Die einzelnen Parameter werden in Listen eingegeben und dann über ebenfalls eingegebene Regeln verarbeitet. Bei den angegebenen Wertebereichen muß auf die Regeln Rücksicht genommen werden. Demgegenüber wird mit den erfindungsgemäßen festen Ablaufprogrammen darauf verzichtet, Fuzzyoperatoren, Defuzzyfizierungsmethoden und andere Eigenheiten der Fuzzy-Logic beeinflussen zu wollen. Der Anwender kann sich auf die Projektierung seines Fuzzy-Systems konzentrieren und sein Erfahrungswissen in Funktionstabellen eingeben, ohne sich Gedanken über Algorithmen und Rechenmethoden machen zu müssen. Weiterhin ist durch das Arbeiten mit Funktions-(Funktionen ausübende) Tabellen eine einfache Optimierung durch die Möglichkeit einer ständigen Beobachtung und On-line Funktionsanderung möglich. Neue Regeln und Parameter können einfach wirksam über die Funktionstabellen eingegeben und in bezug auf ihren Wahrheitsgehalt On-line oder auch zunächst Off-line, z.B. an einem Modell, beobachtet werden.

Die Funktionstabellen, die Optimierungsschaubilder etc. sind vorteilhaft in der Windows-Technik ausgebildet, um mit der Zeiger-Aufruftechnik für ein Menüsystem arbeiten zu können So ergibt sich die vorteilhafte Möglichkeit weniger häufig benötigte Funktionen (Anzeigen) und z.B. die Fenster für Parametereinstellungen in Untermenüs unterzubringen. Das Windows-System ist allgemein bekannt.

Für das Testen eines Fuzzy-Projektes gibt es die Möglichkeit, Off-line mit Hilfe eines parametrierbaren Kurvengenerators das Verhalten an einzelnen Punkten einzustellen oder Dreieckfunktionen an die Eingänge zu schalten. Im entsprechenden Beobachtungsbild kann man dann das Zeitverhalten und die Wirksamkeiten der einzelnen Fuzzyregeln untersuchen.

Es ist dabei möglich, im On-line-Modus im gleichen Beobachtungsbild vorteilhaft das Verhalten des Fuzzy-Systems in der Hardware darzustellen. Über einen Zeitinterrupt werden dazu zyklisch die Daten aus der Hardware ausgelesen und in einem Meßwertarchiv gespeichert. In diesem Meßwertarchiv stehen immer z.B. die letzten 400 Auslesedaten zur Verfügung. Wenn man die Datenübertragung gestoppt hat, kann man auf diese Weise das Verhalten rückwirkend analysieren. Man kann auch eine Auswertelinie durch das Zeitdiagramm schieben und/oder vorteilhaft nur im unteren Bildteil die momentan wirksamen Fuzzyregeln anzeigen.

Die vorstehend geschilderte Vorgehensweise eignet sich besonders für die Optimierung einer Fuzzy-Control-Automatisierungseinheit durch einen Operator. Die Optimierung kann jedoch auch automatisch erfolgen, z.B. durch ein selbstlernendes künstliches neuronales Netz. Besonders geeignet für eine derartige Optimierung ist ein Neuro-Fuzzynetz, wie es z.B. aus dem Aufsatz "Direct Fuzzification of Neuronal Network and Fuzzified Delta Rule", 2. International Conference on Fuzzy-Logic, ISBN 4-938717-01-8 von Y. Hayashi, J. Buckley und E. Czogala bekannt ist. Dieser Aufsatz beschreibt beispielhaft eine direkte Fuzzyfikation von neuronalen Netzen und ermöglicht so ein Optimieren ohne das Umsetzen der einzelnen Größen in diskrete Werte. Die Selbstlernfähigkeit eines solchen Netzes ermöglicht dabei eine Optimierung des Anlagenverhaltens, z.B. des Ausbringens, relativ einfach durch eine Annaherung des tatsächlichen Verhaltens an eine Sollkurve, z.B. nach der bekannten Methode der kleinsten Quadrate.

Die Erfindung wird anhand von Beispielen näher erläutert, aus denen, ebenso wie aus den Unteransprüchen, weitere vorteilhafte Einzelheiten, auch erfinderischer Natur, wie auch aus der Beschreibung, entnehmbar sind. Im einzelnen zeigen:
- FIG 1: eine Prinzipdarstellung der Hardware,
- FIG 2: das Beispiel eines Regeleingabebildes,
- FIG 3: das Beispiel eines Zugehörigkeitsfunktionsbildes,
- FIG 4: das Beispiel eines Beobachtungsbildes und
- FIG 5: das Beispiel eines Prozeßführungsbildes jeweils auf dem Bildschirm des PC.

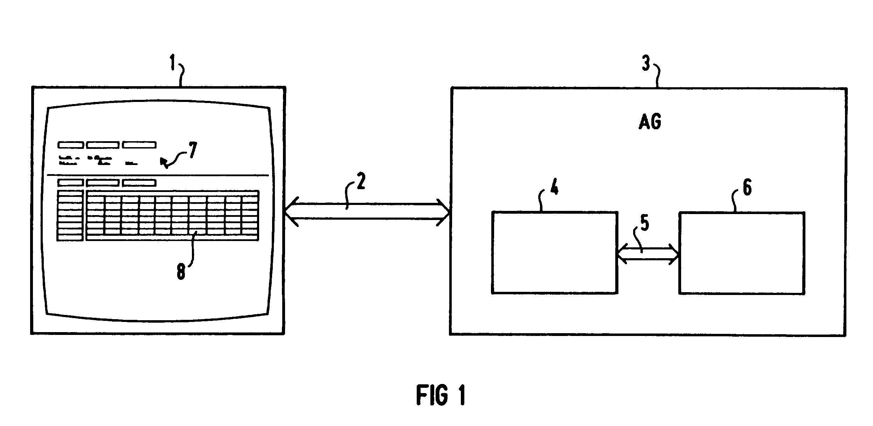

In FIG 1 bezeichnet 1 einen PC mit dem erfindungsgemäßen Fuzzy-Projektierungssystem, den Visualisierungsbausteinen etc. Der PC 1, auf dessen Bildschirm eine Funktionstabelle 8 mit Auswahlpfeil 7 gezeigt ist, ist über eine Datenleitung, z.B. einen bidirektionalen Bus 2 mit dem Automatisierungsgerät 3, z.B. einer SPS, verbunden. Das Automatisierungsgerät 3 enthält die für das Ablaufen des Fuzzy-Standardsystems (FSS) notwendige Hard- und Software, wobei die Software in zwei Teile 4 und 6 unterteilt ist, die durch ein symbolisch dargestelltes Link 5 miteinander verbunden sind. Der Softwareteil, der durch 6 symbolisiert wird, betrifft die festen, Standardteile des Fuzzy-Programms, während der Softwareteil 4 die variablen Teile betrifft, z.B. die Fuzzy-Parametrierdaten, die Zugehörigkeitsfunktionen,-regeln, -grenzen sowie die Anzahl der Ein- und Ausgänge. Das Fuzzy-Softwaresystem besteht also im wesentlichen aus mehreren Teilen, einmal dem Entwurfs- und Darstellungsteil im PC 1 sowie dem variablen Programmteil 4 in dem Automatisierungsgerät und dem festen Programmteil 6, ebenfalls im Automatisierungsgerät. Dieser Teil 6 ist jeweils speziell der CPU und der Peripherie des jeweiligen Automatisierungsgeräts angepaßt. So sind Automatisierungsgeräte unterschiedlicher Hersteller verwendbar.

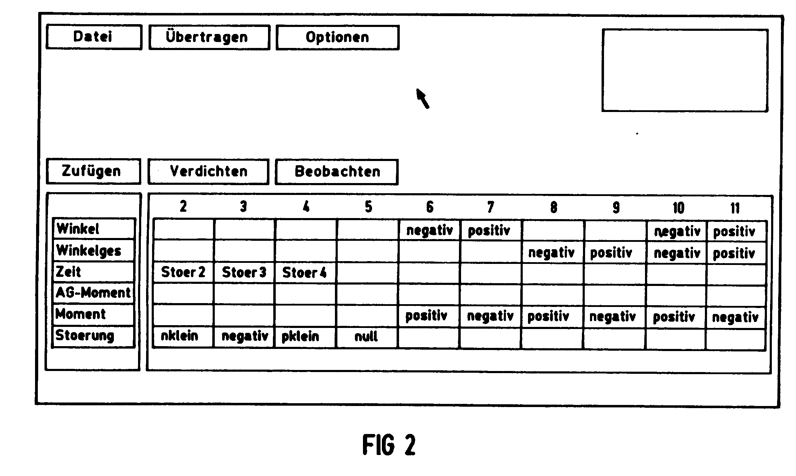

FIG 2 zeigt das Regeleingabebild eines als Beispiel gewählten inversen Pendels, das sich besonders gut für die Simulation eignet. Das Erfahrungswissen ist in Form von Fuzzyregeln eingegeben, die die Ursache-Wirkungszusammenhänge in Wenn-Dann-Aussagen wiedergeben. Das Beispiel des inversen Pendels ist in der Fuzzy-Literatur bereits vielfach abgehandelt und kann daher als dem Fachmann bekannt vorausgesetzt werden. FIG 2 zeigt im einzelnen das Bildschirmfenster von FIG 1 mit der Funktionstabelle 8 in Form einer Regeltabelle. Im oberen Teil von FIG 2 befinden sich die Bedienelemente für die Untermenüs und ein Informationsfeld mit dem Projektnamen und den eingestellten Parametern für die Kopplung. Die untere Bildhälfte wird im wesentlichen von der Regeltabelle bestimmt. Im linken Teil der Tabelle sind die Ein- und Ausgangsgrößen dargestellt, die zur Abgrenzung durch eine Linie getrennt sind. Im Beispiel werden vier Ein- und zwei Ausgangsgrößen eingesetzt. Im rechten Teil ist die eigentliche Regeltabelle angeordnet. Von den eingegebenen Fuzzyregeln kann immer nur ein Ausschnitt angezeigt werden.

Eine einzelne Regel ist in einer Spalte angeordnet, wobei die Eingangsgrößen UND-verknüpft sind, und eine Regel im DANN-Teil auf mehrere Ausgänge gleichzeitig wirken kann. Die Regel Nr. 11 lautet beispielsweise: WENN der Winkel positiv ist UND die Winkelgeschwindigkeit positiv ist, DANN Moment auf negativ.

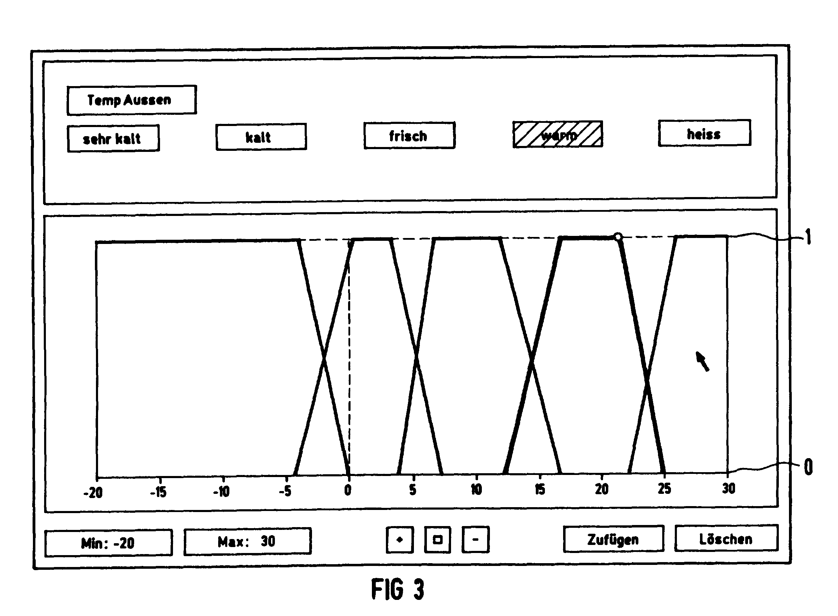

FIG 3 zeigt das Bildschirmfenster des PC mit einer Darstellung von linguistischen Variablen und einer Eingabe von Zugehörigkeitsfunktionen. Es sind im gezeigten Beispiel sieben Zugehörigkeitsfunktionen möglich. Eine einzelne Funktion besteht immer aus vier Punkten, wobei dem ersten und dem vierten Punkt ein Wahrheitsgrad von Null und dem zweiten und dritten Punkt ein Wahrheitsgrad von 1 zugeordnet sind. Mit diesen Einschränkungen kann man rechteckige, dreieckige und trapezförmige Zugehörigkeitsfunktionen definieren, die für sehr viele Anwendungsfalle der Automatisierungstechnik ausreichend sind. Selbstverständlich sind auch andere Zugehörigkeitsfunktionen implementierbar. Das gewählte Beispiel gilt für das bekannte Heizungsbeispiel mit fünf Außentemperaturbereichen, das ebenfalls in der Fuzzyliteratur bereits eingehend abgehandelt worden ist.

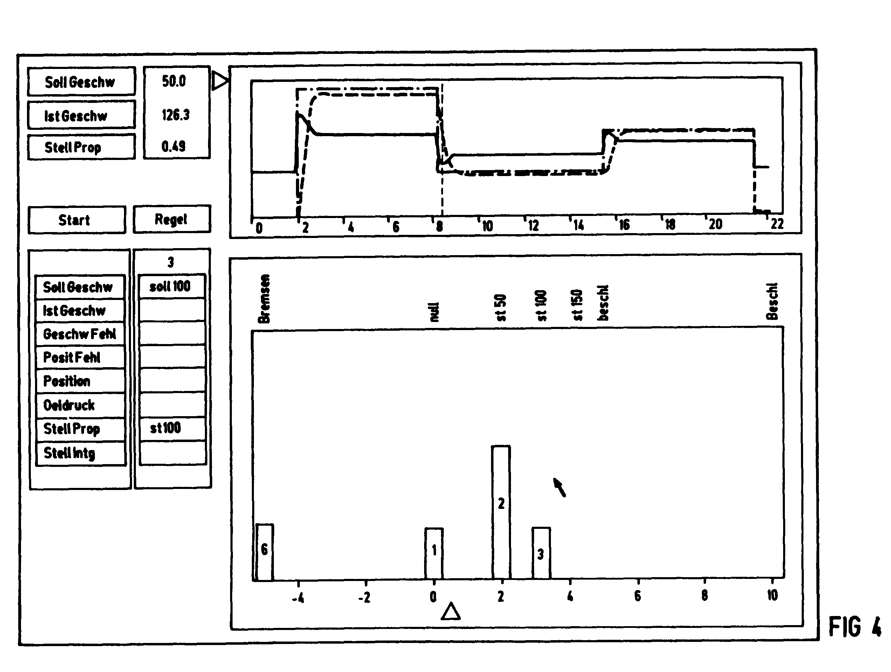

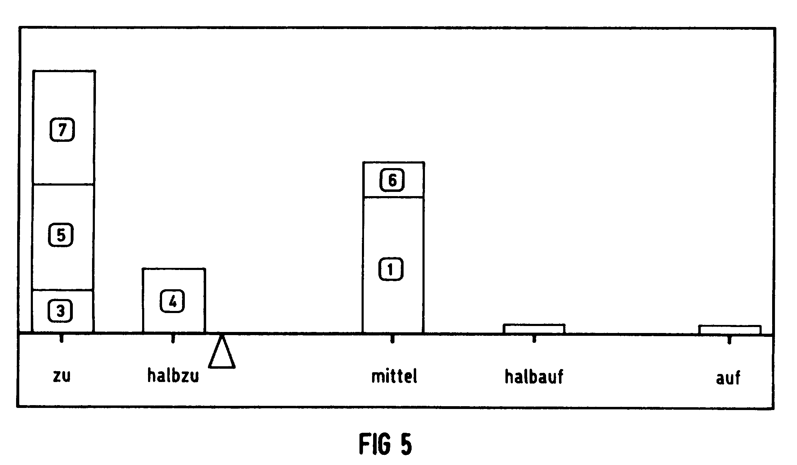

FIG 4 zeigt nun ein typisches Beobachtungsbild für eine Prozeßführung und FIG 5 ein typisches Beobachtungsbild mit der Waagebalkendarstellung. Der Waagebalken zeigt die Einflüsse der einzelnen Regeln, z.B. der Regeln von FIG 2. Wie ersichtlich ist es möglich, durch das Einfügen neuer Regeln oder durch unterschiedliche Parametrierung der bereits bestehenden Regeln die Gewichtung auf dem als Basislinie dienenden Waagebalken zu verändern, so daß die als Schneide einer Waage symbolisch dargestellte (rote) Markierung in Form eines Pfeiles sich entsprechend verschiebt. So ist eine einfache Optimierung unter Berücksichtigung der Auswirkung unterschiedlicher Parametrierungen und unterschiedlicher Regeln On-line und fortlaufend möglich. Dieser Vorgang kann auch relativ einfach selbstoptimierend ausgebildet werden.

Hierzu können die Algorithmen aus dem vorgenannten Aufsatz, aber auch der Backpropagation-Algorithmus von D.E. Rumelhart eingesetzt werden. Der Aufsatz von Hayashi et al ist ebenfalls als Anlage beigefügt und als Bestandteil der Offenbarung anzusehen.

Die On-line Optimierung wird vorteilhaft durch den prinzipiellen, neuen Aufbau des Automatisierungssystems möglich, bei dem das Ablaufprogramm in der Zielhardware unveränderlich ist. Änderungen im Fuzzy-System werden in bisher unerreicht vorteilhafter Weise lediglich als Parametrierdaten in das Zielsystem übertragen. Dies geht unvergleichlich schneller als eine neue Codegenerierung. Das bedeutet, daß das Ändern, Löschen oder Zufügen von Fuzzyregeln, Ein- und Ausgängen oder Zugehörigkeitsfunktionen durch ein Übertragen von Datenstrukturen realisiert wird. Diese Konzeption ist insbesondere für kleine und mittlere Automatisierungslösungen geeignet.

Für größere Automatisierungslösungen ist es möglich, mehrere Fuzzysysteme in ein Automatisierungsgerät einzubringen, hierfür muß man nur weitere Datenbausteine installieren. Dabei wird der PC mit einer Anzeige versorgt, die anzeigt, welches Fuzzysystem zur Zeit installiert ist und arbeitet. Die Geschwindigkeiten, die ein Gerät mit dem erfindungsgemäßen Automatisierungssystem erreicht, sind überraschend hoch. Bei einer schnellen Standard-CPU für SPS-Anwendungen ergibt sich für die Gleitpunktvariante etwa eine Zeit von 5 ms, bis ein Regelbefehl generiert ist. Dies sind Zeiten, die für normale Anwendungsfälle in Anlagen mehr als ausreichend sind. Nur in absoluten Ausnahmefällen muß für zeitkritische Anwendungen auf Fuzzy-Hardwarelösungen zurückgegriffen werden.

## Patentansprüche

1. Automatisierungssystem mit programmierbaren Automatisierungsgeraten, nämlich speicherprogrammierbaren Steuerungen (SPS), zur Regelung einer industriellen Anlage, und mit zumindest einer Dateneingabe-, Rechen- und Projektierungseinheit (DRP) zur Datengenerierung für Fuzzy-Standardsysteme (FSS), wobei diese ein fortlaufend optimierbares Fuzzy-Entwurfsprogramm aufweist, dem Zugehörigkeitsfunktionen in parametrierter Form eingebbar sind, und wobei die Eingabe der Zugehörigkeitsfunktionen sowie von Bearbeitungsbefehlen und Parametern über Funktionstabellen in Bildform erfolgt,
**dadurch gekennzeichnet,**
daß in den Automatisierungsgeräten (3) in an die jeweiligen Gerätebedingungen angepaßten, festen Ablaufprogrammen zur Regelgrößenbildung Fuzzy-Standard-Programme abgearbeitet werden, wobei die Automatisierungsgeräte (3) die für das Ablaufen der Fuzzy-Standardsysteme (FSS) notwendige Hard-sowie die Software in zwei Teilen (4 und 6) enthalten, die datentechnisch miteinander verbunden sind und wobei der eine Softwareteil (6) die Standardteile des Fuzzy-Programms betrifft, während der andere Softwareteil (4) die variablen Teile betrifft, die Fuzzy-Parametrierdaten, die Zugehörigkeitsfunktionen, -regeln, -grenzen sowie die Anzahl der Ein- und Ausgänge o.ä. enthalten.

2. Automatisierungssystem nach Anspruch 1,
**dadurch gekennzeichnet,**
daß das an den Fuzzy-Standardsystemen (FSS) teilnahmefähige Programm der DRP (1) einen Auswertungsteil für die bearbeiteten Fuzzyregeln aufweist, in dem die Wirksamkeit (der Wahrheitsgehalt) der einzelnen Fuzzyregeln ausgewertet wird.

3. Automatisierungssystem nach Anspruch 2,
**dadurch gekennzeichnet,**
daß auf dem PC-Bildschirm ein Beobachtungsbild für das Zeitverhalten und die Wirksamkeiten der einzelnen Fuzzyregeln darstellbar ist.

4. Automatisierungssystem nach Anspruch 2 oder 3,
**dadurch gekennzeichnet,**
daß das Beobachtungsbild für die Wirksamkeit der Fuzzyregeln in Balkentechnik ausgebildet ist, wobei die Höhe der Balken der Wirksamkeit der einzelnen Regeln entspricht und wobei die Lage der Balken mit der Position der Zugehörigkeitsfunktionen des Ausganges übereinstimmt.

5. Automatisierungssystem nach Anspruch 2,3 oder 4,
**dadurch gekennzeichnet,**
daß die Gewichtung der Wirksamkeit der Zugehörigkeitsfunktionen nach der Schwerpunktmethode erfolgt und wobei der Schwerpunkt bei Bildschirmdarstellung eine Markierung erfahren kann, insbesondere in Form eines roten Dreiecks.

6. Automatisierungssystem nach Anspruch 1,2,3,4 oder 5,
**dadurch gekennzeichnet,**
daß die Gewichtung o.ä. der einzelnen Fuzzyregeln optimierend verändert wird, insbesondere durch einen Anlagenoperator, aber auch durch ein künstliches neuronales Netz mit Backpropagation-Algorithmus.

7. Automatisierungssystem nach Anspruch 1,2,3,4,5 oder 6,
**dadurch gekennzeichnet,**
daß das Fuzzyregelprogramm in bezug auf Relevanz und Vollständigkeit On-line überprüfbar und veränderbar ausgebildet ist.

8. Automatisierungssystem nach einem oder mehreren der vorhergehenden Ansprüche,
**dadurch gekennzeichnet,**
daß der Datenzugang zu Fuzzy-Softwareblöcken in Automatisierungsgeräten eine gesicherte Kennung enthält, vorzugsweise mit einer Prüfsequenz.

9. Automatisierungssystem nach einem oder mehreren der vorhergehenden Ansprüche,
**dadurch gekennzeichnet,**
daß die Fuzzy-Software in den Automatisierungsgeräten in einem oder mehreren Funktionsbausteinen enthalten ist, die CPU-spezifisch ausgebildet sind.

10. Automatisierungssystem nach einem oder mehreren der vorhergehenden Ansprüche,
**dadurch gekennzeichnet,**
daß es eine Menü-Fensterdarstellung mit Aufrufmöglichkeiten für einzelne Funktionen, z.B. die Fuzzyregeln und Parameter sowie zur Optimierung eine On-line-Darstellung der Wirksamkeit der Fuzzyregeln verwendet.

11. Automatisierungssystem nach einem oder mehreren der vorhergehenden Ansprüche, **gekennzeichnet,** durch die Verwendung einer Fuzzyregel- und Parametereingabe- und Projektierungseinheit, die insbesondere mit Funktionstabelleneingaben, in Verbindung mit zumindest einer SPS mit festen Fuzzy-Standard-Systemen (FSS) arbeitet.

12. Automatisierungssystem nach einem oder mehreren der vorhergehenden Ansprüche,
**dadurch gekennzeichnet,**
daß es in den Automatisierungsgeraten ein Erkennungsprogramm für nicht durch das Standardprogramm ausregelbare Störungen und ein Überführungsprogramm in den sicheren Zustand der Anlage, insbesondere den Abfahrzustand, aufweist.

## Claims

1. Automation system with programmable automation equipment, in particular stored-program controllers (SPC) for controlling an industrial plant, and having at least one data input, computation and design unit (DRP) for generating data for fuzzy standard systems (FSS), these having a fuzzy design program which can be continuously optimized and to which membership functions can be input in parameterizable form, and the input of the membership functions as well as processing commands and parameters being effected in graphical form via function tables, **characterised in that** in the automation equipment (3), fuzzy standard programs for generating process variables are processed in fixed sequential programs that are adapted to the respective hardware conditions, where the automation equipment (3) contains the two hardware and software parts (4 and 6) which have a data link between them and are required for running the fuzzy standard systems (FSS), and where the one software part (6) concerns the standard parts of the fuzzy program, while the other software part (4) concerns the variable parts which contain fuzzy parameter data, the membership functions, membership rules, membership limits, as well as the number of inputs and outputs, and the like.

2. Automation system according to Claim 1, **characterised in that** the program of the DRP (1) which has fuzzy standard system (FSS) capability has an analysis part for the fuzzy rules that are processed, in which the efficacy (the truth content) of the individual fuzzy rules is analyzed.

3. Automation system according to Claim 2, **characterised in that** a visualization diagram for the time characteristic and the efficacy of the individual fuzzy rules can be displayed on the screen of the PC.

4. Automation system according to Claims 2 or 3, **characterised in that** the visualization diagram for the efficacy of the fuzzy rules is designed as a bar chart, the height of the bars corresponding to the efficacy of the individual rules and the location of the bars corresponding to the position of the membership functions of the output.

5. Automation system according to Claims 2, 3 or 4, **characterised in that** the efficacy of the membership functions is weighted according to the centre of gravity method, the centre of gravity being able to be marked, in particular in the form of a red triangle, on the screen display.

6. Automation system according to Claims 1, 2, 3, 4 or 5, **characterised in that** the weighting and the like of the individual fuzzy rules is varied for the purposes of optimization, in particular by a plant operator, but also by an artificial neural network with a back-propagation algorithm.

7. Automation system according to Claims 1, 2, 3, 4, 5 or 6, **characterised in that** the fuzzy rule program is designed so that it can be checked and varied with regard to relevance and completeness.

8. Automation system according to one or more of the preceding Claims, **characterised in that** the data access to fuzzy software blocks in automation equipment contains a secure identifier, preferably with a test sequence.

9. Automation system according to one or more of the preceding Claims, **characterised in that** the fuzzy software is contained in one or more function components in the automation equipment, which have a CPU-specific design.

10. Automation system according to one or more of the preceding Claims, **characterised in that** it uses a menu window display with the facility for calling up individual functions, such as the fuzzy rules and parameters, as well as for optimizing an on-line display of the efficacy of the fuzzy rules.

11. Automation system according to one or more of the preceding Claims, **characterised by** the use of a fuzzy rule and parameter input and design unit that operates in particular with function table inputs in conjunction with at least one SPC with fixed fuzzy standard systems (FSS).

12. Automation system according to one or more of the preceding Claims, **characterised in that** it has in the automation equipment a detection program for malfunctions that cannot be corrected by the standard program and a program for conversion to the safe condition of the plant, in particular the shutdown status.

## Revendications

1. Système d'automatisation comportant des appareils d'automatisation programmables, à savoir des commandes à programme enregistré (SPS), pour la régulation d'une installation industrielle, et au moins une unité d'entrée de données, de calcul et de conception (DRP) pour générer des données destinées à des systèmes standard à logique floue (FSS), ladite unité possédant un programme de conception flou qui peut être optimisé en continu et dans lequel peuvent être entrées des fonctions d'appartenance paramétrées et l'entrée des fonctions d'appartenance ainsi que d'instructions de traitement et de paramètres s'effectuant par l'intermédiaire de tables de fonctions sous forme de graphique,
caractérisé en ce
que des programmes standard flous sont traités dans les appareils (3) d'automatisation, dans des programmes exécutifs fixes adaptés aux conditions des appareils, pour la formation de grandeurs de réglage, les appareils (3) d'automatisation contenant dans deux éléments (4 et 6) reliés entre eux le matériel et le logiciel nécessaires à l'exploitation des systèmes standard à logique floue (FSS), l'un (6) des éléments logiciels concernant les éléments standard du programme flou tandis que l'autre (4) élément logiciel concerne les éléments variables qui comprennent les données de paramétrage floues, les fonctions, règles et limites d'appartenance ainsi que le nombre des entrées et sorties ou analogues.

2. Système d'automatisation selon la revendication 1,
caractérisé en ce
que le programme de la DRP (1) pouvant être utilisé dans les systèmes standard à logique floue (FSS) comporte une partie d'analyse des règles floues traitées, partie dans laquelle l'efficacité (degré de vérité) des différentes règles floues est analysé(e).

3. Système d'automatisation selon la revendication 2,
caractérisé en ce
qu'un graphique d'observation du comportement dans le temps et de l'efficacité des différentes règles floues peut être représentée sur l'écran du PC.

4. Système d'automatisation selon la revendication 2 ou 3,
caractérisé en ce
que le graphique d'observation de l'efficacité des règles floues est représentée selon la technique des barres, la hauteur des barres correspondant à l'efficacité des différentes règles et la position des barres coïncidant avec la position des fonctions d'appartenance de la sortie.

5. Système d'automatisation selon la revendication 2, 3 ou 4,
caractérisé en ce
que la pondération de l'efficacité des fonctions d'appartenance s'effectue suivant la méthode du centre de gravité, le centre de gravité pouvant être marqué sur l'écran, notamment par un triangle rouge.

6. Système d'automatisation selon la revendication 1, 2, 3, 4 ou 5,
caractérisé en ce
que la pondération ou analogue des différentes règles floues est modifiée en vue d'une optimisation, notamment par un opérateur de l'installation, mais également par un réseau neuronal artificiel avec un algorithme de backpropagation.

7. Système d'automatisation selon la revendication i, 2, 3, 4, 5 ou 6,
caractérisé en ce
que le programme flou est conçu de manière à pouvoir en contrôler en mode en ligne la pertinence et l'intégralité et de manière à pouvoir être modifié.

8. Système d'automatisation selon l'une ou plusieurs des revendications précédentes,
caractérisé en ce
l'accès aux données des blocs logiciels flous dans des appareils d'automatisation comporte un code protégé, de préférence avec une séquence de test.

9. Système d'automatisation selon l'une ou plusieurs des revendications précédentes,
caractérisé en ce
le logiciel flou dans les appareils d'automatisation est contenu dans un ou plusieurs modules fonctionnels qui sont conçus en fonction de l'UCT.

10. Système d'automatisation selon l'une ou plusieurs des revendications précédentes,
caractérisé en ce
qu'il utilise un système de visualisation à fenêtres et menus avec des possibilités d'appel de différentes fonctions, par exemple des règles floues et des paramètres et en vue d'une optimisation, une représentation en ligne de l'efficacité des règles floues.

11. Système d'automatisation selon l'une ou plusieurs des revendications précédentes,
caractérisé
par l'utilisation d'une unité d'entrée de règles floues et de paramètres et de conception qui fonctionne en particulier avec des entrées de tables de fonctions en liaison avec au moins une SPS et des systèmes standard à logique floue (FSS) fixes.

12. Système d'automatisation selon l'une ou plusieurs des revendications précédentes,
caractérisé en ce
qu'il comporte dans les appareils d'automatisation un programme de reconnaissance de perturbations non régulables par le programme standard et un programme de passage à l'état sûr de l'installation, notamment à l'état d'arrêt.
